# EUROPEAN PATENT APPLICATION

(11) **EP 4 753 281 A1**
(43) Date of publication of application: **03.06.2026**
(21) Application number: 25202264.5
(22) Date of filing: 15.09.2025
(51) Int. Cl.: H04Q 9/00

(54) **BATTERY MODULE, METHOD OF OPERATING THE SAME, AND BATTERY PACK**

(30) Priority: 29.11.2024 KR 20240175343
(71) Applicant: SAMSUNG SDI CO., LTD., Yongin-si, Gyeonggi-do 17084 (KR)
(72) Inventor: KIM, Min Su, 16678 Suwon-si (KR)
(74) Representative: Marks & Clerk LLP

(57) **Abstract**

The present disclosure relates to a battery module, a method of operating the same, and a battery pack, and a technical problem to be solved provides a mechanism that may improve thermal management efficiency and space efficiency of the battery pack. To this end, the prevent disclosure provides a configuration for performing communication between battery management systems (BMSs) through acoustic communication using silicone oil as a medium.

## Description

### FIELD

The present disclosure relates to a battery module, a method of operating the same, and a battery pack.

### BACKGROUND

Electric vehicles (xEVs) are eco-friendly vehicles that replace conventional internal combustion engine vehicles and are rapidly spreading worldwide. The xEVs include battery electric vehicles (BEVs), plug-in hybrid electric vehicles (PHEVs), and hybrid electric vehicles (HEVs), of which core components are high-performance battery systems. A battery management system (BMS) is essentially used for efficient management and monitoring of these battery systems.

The BMS serves to monitor and control a charging state, a health state, a temperature, and the like of a battery in real time to optimize performance and a lifetime of the battery. Recently, development of a battery system including the BMS to which wireless communication is applied has been actively conducted. The battery system including the BMS to which the wireless communication is applied includes a plurality of slave BMSs (or node BMSs) configured to manage a battery module and a master BMS (or a manager BMS) configured to manage the plurality of slave BMSs through the wireless communication. In the battery system, the number of wiring lines provided in a battery pack can be reduced, thereby reducing a weight of the battery pack and improving ease of maintenance of the battery pack.

The herein information disclosed in this Background section is for enhancement of understanding of the background of the present disclosure, and therefore, it may contain information that does not constitute related (or prior) art.

### SUMMARY

The present disclosure is directed to providing a battery module capable of acoustic communication with another battery module and a master BMS using silicone oil as a medium with which a battery pack is filled, a method for operating the same, and a battery pack including the battery module.

However, objects that the present disclosure intends to achieve are not limited to the herein-described objects and other objects that are not described may be clearly understood by those skilled in the art from the following description.

A battery pack according to embodiments of the present disclosure includes a housing, a plurality of battery modules or a cell stack provided inside the housing, a fluid with which an inside of the housing is filled, and a master battery management system (BMS) that manages the plurality of battery modules or the cell stack, wherein a battery module or the cell stack performs acoustic communication with another battery module, another cell stack, or the master BMS using the fluid as a medium.

The fluid may be silicone oil.

The battery module or the cell stack may include a plurality of battery cells, a slave BMS that manages the plurality of battery cells and a communication module that supports the acoustic communication.

The communication module may be an underwater acoustic radio frequency integrated circuit (UARF IC).

The UARF IC may include an ultrasonic transducer array, an analog front end, and a digital signal processor.

The analog front end may include a low noise amplifier, a variable gain amplifier, an analog-to-digital converter, and a digital-to-analog converter.

The UARF IC may modulate input data into an orthogonal frequency division multiplexing (OFDM) signal through the digital signal processor, convert the OFDM signal into an analog signal through the analog front end, amplify the converted analog signal, convert the amplified analog signal into an acoustic signal through the ultrasonic transducer array, and then output the converted acoustic signal.

The UARF IC may receive an acoustic signal through the ultrasonic transducer array, amplify the acoustic signal through the analog front end, convert the amplified acoustic signal into a digital signal, and demodulates the digital signal through the digital signal processor.

The UARF IC may estimate a Doppler shift of the acoustic signal and compensate the acoustic signal according to the Doppler shift.

The UARF IC may further include a least mean square (LMS)-based adaptive equalizer, and the UARF IC may correct distortion generated in the acoustic signal due to a change in a characteristic of the fluid using the adaptive equalizer.

The UARF IC may perform channel coding using a low density parity check (LDPC) code.

A battery module according to embodiments of the present disclosure includes a plurality of battery cells, a battery management system (BMS) that manages the plurality of battery cells, and an underwater acoustic radio frequency integrated circuit (UARF IC) that transmits data transmitted from the BMS using a fluid as a medium or receives data transmitted using the fluid as a medium and transmits the received data to the BMS.

A method of operating a battery module according to embodiments of the present disclosure includes transmitting, by an underwater acoustic radio frequency integrated circuit (UARF IC), data transmitted from a battery management system (BMS) using a fluid as a medium and receiving, by the UARF IC, the data transmitted using the fluid as a medium and transmitting the received data to the BMS.

However, effects that can be achieved through the present disclosure are not limited to the herein-described effects and other effects that are not described may be clearly understood by those skilled in the art from the detailed descriptions.

At least some of the above and other features of the invention are set out in the claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a block diagram illustrating a battery pack according to embodiments of the present disclosure;
FIG. 2 is a block diagram illustrating a communication module of a battery module according to embodiments of the present disclosure;
FIG. 3 is an example view for describing a method of estimating and compensating for a Doppler shift;
FIG. 4 is an example view for describing a method of updating an equalizer coefficient;
FIG. 5 is an example view for describing a method of encoding and decoding data;
FIG. 6 is a first flowchart illustrating a method of operating a battery module according to embodiments of the present disclosure; and
FIG. 7 is a second flowchart illustrating the method of operating the battery module according to embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her disclosure in the best way.

Embodiments described in this specification and the configurations shown in the drawings are only some of embodiments of the present disclosure and do not represent all of the technical ideas, aspects, and features of the present disclosure. Accordingly, it should be understood that there may be various equivalents and modifications that can replace or modify embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

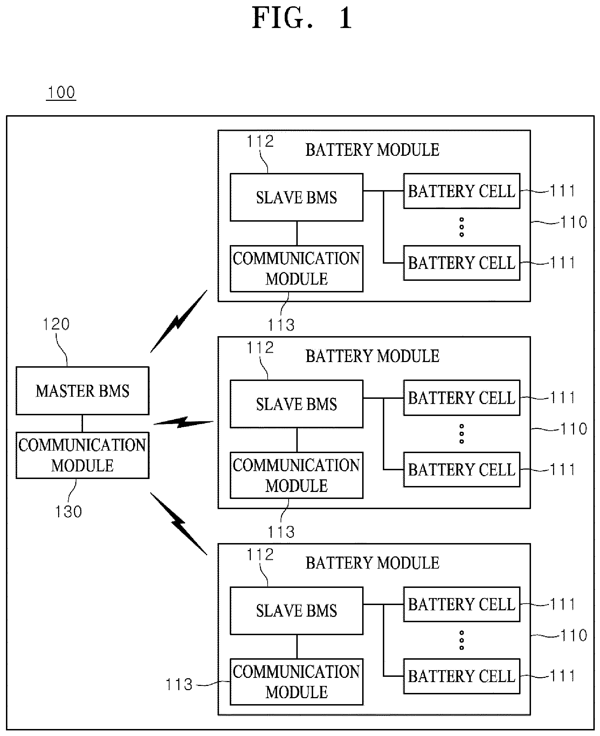

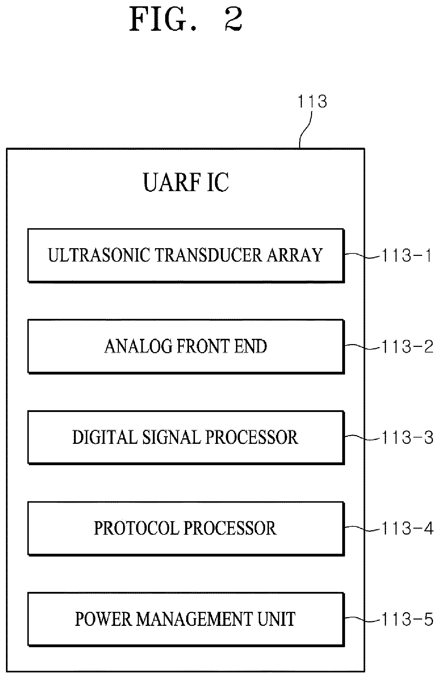

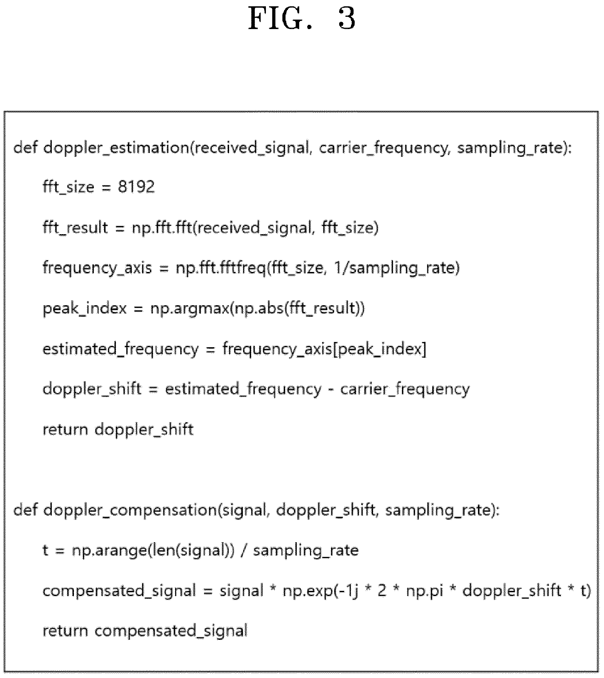

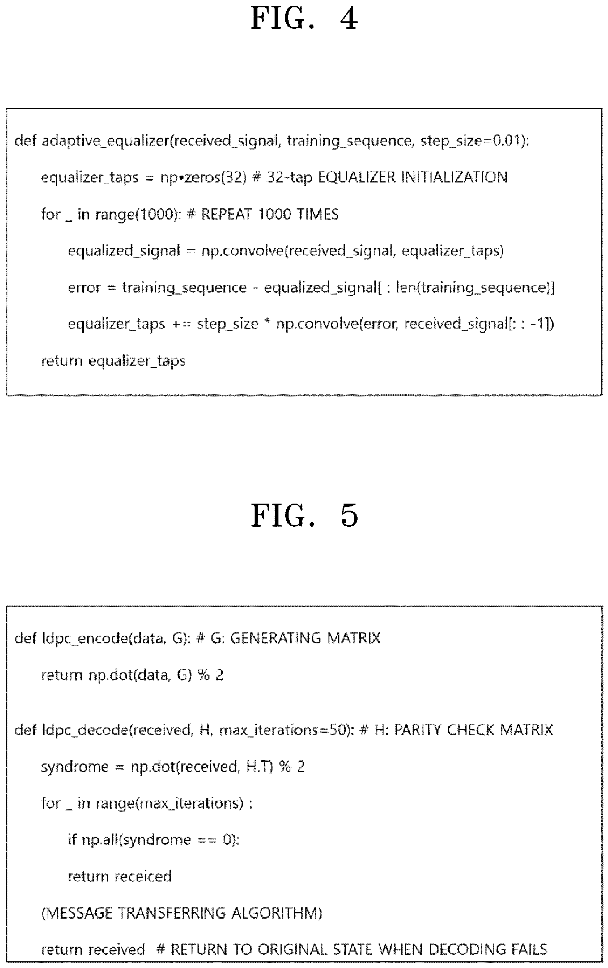

FIG. 1 is a block diagram illustrating a battery pack according to embodiments of the present disclosure, FIG. 2 is a block diagram illustrating a communication module of a battery module according to embodiments of the present disclosure, FIG. 3 is an example view for describing a method of estimating and compensating for a Doppler shift, FIG. 4 is an example view for describing a method of updating an equalizer coefficient, and FIG. 5 is an example view for describing a method of encoding and decoding data.

Referring to FIG. 1, a battery pack 100 according to embodiments of the present disclosure may include a plurality of battery modules 110, a master battery management system (master BMS) 120, and a communication module 130. The battery pack 100 may include a pack housing having an accommodation space for accommodating the plurality of battery modules 110, the master BMS 120, and the communication module 130. The plurality of battery modules 110 may be connected to each other in series or in parallel. The battery pack 100 according to embodiments of the present disclosure may further include various components in addition to the components illustrated in FIG. 1.

The inside of the pack housing may be filled with fluid. The fluid may be silicone oil. However, the type of fluid is not limited to the herein-described embodiments, and various types of fluids may be used instead of the silicone oil. Hereinafter, for convenience of description, the description will be made based on assumption that the fluid is the silicone oil. The plurality of battery modules 110 may be connected to each other via the silicone oil. The silicon oil may have high thermal conductivity and high electrical insulation. Thus, as the inside of the pack housing is filled with the silicone oil, thermal management efficiency of the battery module 110 may be improved. The silicone oil may have high thermal capacity and high flame retardancy. Thus, as the inside of the pack housing is filled with the silicone oil, fire spreading due to thermal runaway of the battery module 110 or battery pack 100 may be effectively prevented. The silicone oil may be used as a medium for communication between the battery modules 110 or between the battery module 110 and the master BMS 120. The inside of the pack housing may be filled with fluid, for example silicone oil, having a thermal conductivity of 0.15 W/mK, an electrical insulation of 10¹⁴ Ω·cm or more, a viscosity of 50 cSt, and a flash point of 300 °C or more, and in this case, the battery pack 100 may be safely operated within a range of -40 °C to 120 °C.

The battery pack 100 may include a cell stack instead of the battery module 110. The cell stack may be a stack in which battery cells 111 are stacked. The cell stack may be accommodated in an accommodation space of the pack housing or accommodated in an accommodation space in the battery pack 100 partitioned by a frame, a partition wall, etc. A variable heat shielding structure controlled by a shape memory alloy actuator may be applied to an outer wall of the battery pack 100. When the cell stack is included in the battery pack 100 instead of the battery module 110, a function of the battery module 110, which will be described herein, may be performed by the cell stack.

The master BMS 120 may manage the battery pack 100. The master BMS 120 may detect a state (a voltage, a current, a temperature, or the like) of the battery pack 100 and generate state information indicating the state of the battery pack 100 based on the detection result. The master BMS 120 may detect a state (a voltage, a current, a temperature, or the like) of each of the battery modules 110 constituting the battery pack 100 and generate state information indicating the state of each of the battery modules 110 based on the detection result.

The master BMS 120 may communicate with a slave BMS 112 through acoustic communication using silicone oil as a medium. The master BMS 120 may perform the acoustic communication through the communication module 130. The master BMS 120 may receive and process data transmitted from the slave BMS 112. The master BMS 120 may control the slave BMS 112 by transmitting data to the slave BMS 112. The master BMS 120 may communicate with an external device in wireless and/or wired manners.

The battery module 110 may include the plurality of battery cells 111, a slave battery management system (slave BMS) 112, and a communication module 113. The battery module 110 may include a module housing having an accommodation space for accommodating the plurality of battery cells 111, the slave BMS 112, and the communication module 113. The plurality of battery cells 111 may be connected to each other in series or in parallel. The battery module 110 may have a honeycomb structure having a hexagonal cross section.

The plurality of battery cells 111 may be accommodated in the module housing in a stacked form. The battery cell 111 may include a positive electrode lead and a negative electrode lead. Various types of battery cells such as a circular type, a prismatic type, and a pouch type may be used to form the battery module 110.

The battery cell 111 may generate a large amount of heat during charging/discharging. The generated heat may be accumulated in the battery cell 111 to cause degradation of the battery cell 111. Thus, the battery pack 100 may further include a cooling member to suppress the degradation of the battery cell 111. The cooling member may be provided at a lower portion of the accommodation space in which the battery cell 111 is provided, but the present disclosure is not limited thereto, and the cooling member may be provided at an upper portion or a side surface thereof according to the battery pack 100.

The slave BMS 112 may manage the battery module 110. The slave BMS 112 may detect a state (a voltage, a current, a temperature, or the like) of the battery module 110 and generate state information indicating the state of the battery module 110 based on the detection result. The slave BMS 112 may detect a state (a voltage, a current, a temperature, or the like) of each of the battery modules 111 constituting the battery module 110 and generate state information indicating the state of each of the battery modules 111 based on the detection result.

The slave BMS 112 may communicate with the master BMS 120 or another slave BMS 112 through acoustic communication using the silicone oil as a medium. The slave BMS 112 may perform the acoustic communication through the communication module 113. The slave BMS 112 may receive and process data transmitted from the master BMS 120 or the another slave BMS 112. The slave BMS 112 may transmit data (the state information or the like) related to the battery module 110 or the battery cell 111 to the master BMS 120 or the another slave BMS 112.

The communication module 113 may support acoustic communication. The communication module 113 may transmit data transmitted from the slave BMS 112 using silicone oil as a medium. The communication module 113 may receive data transmitted using the silicone oil as a medium and transmit the data to the slave BMS 112.

An underwater acoustic radio frequency integrated circuit (UARF IC) configured to perform acoustic communication may be used as the communication module 113. Referring to FIG. 2, the UARF IC 113 may include an ultrasonic transducer array 113-1, an analog front end 113-2, a digital signal processor 113-3, a protocol processor 113-4, and a power management unit 113-5. The communication module 130 has the same structure as the communication module 113 and may be operated in the same manner.

The ultrasonic transducer array 113-1 may include a plurality of ultrasonic transducers. The ultrasonic transducer array 113-1 may generate an acoustic signal (ultrasonic signal). The ultrasonic transducer array 113-1 may receive the acoustic signal. The ultrasonic transducer array 113-1 may include a piezoelectric ceramic (PZT) and/or may be operated in a frequency range of 100 kHz to 500 kHz. The ultrasonic transducer array 113-1 may have a 4*4 array structure and may support a beamforming function.

The analog front end 113-2 may pre-process the acoustic signal received through the ultrasonic transducer array 113-1. The analog front end 113-2 may pre-process the acoustic signal to convert the pre-processed acoustic signal into a form to be digitally processed. The analog front end 113-2 may pre-process a digitally processed signal. The analog front end 113-2 may pre-process the digitally processed signal and convert the pre-processed signal into a form that may be converted into the acoustic signal.

The analog front end 113-2 may include a low-noise amplifier (LNA) that amplifies a signal, a variable gain amplifier that maintains a strength of the signal within a certain range by adjusting a gain according to the strength of the signal, an analog-to-digital converter that converts an analog signal into a digital signal, and a digital-to-analog converter that converts a digital signal into an analog signal. A gain range of the LNA may be in a range of 20 dB to 60 dB, and/or a noise index thereof may be less than or equal to 2 dB. A gain range of the variable gain amplifier may be in a range of 0 dB to 40 dB. Bit resolution of the analog-to-digital converter and the digital-to-analog converter may be 24 bits, and a maximum sampling rate thereof may be 2 MSPS. An architecture of the digital signal processor 113-3 may be a very long instruction word (VLIW), and an operating frequency thereof may be 500 MHz.

The digital signal processor (DSP) 113-3 may modulate or demodulate a signal. The DSP 113-3 may modulate or demodulate a signal using an orthogonal frequency division multiplexing (OFDM) manner, but the present disclosure is not limited thereto, and various manners may be used to modulate or demodulate a signal.

The protocol processor 113-4 may manage a protocol used in a physical layer, a data link layer, a network layer, and a transport layer, and may process data according to a protocol rule so that the data may be transmitted and received in each layer.

In the present embodiment, the UARF IC 113 may transmit and receive data through a network including a physical layer in which the OFDM is used as a modulation method, a frequency band is in a range of 100 kHz to 500 kHz, a subcarrier interval is 1 kHz, a symbol duration is 1 ms, and a cyclic prefix length is 100 µs, a data link layer in which a preamble (128 bits), a header (64 bits), a payload (variable length up to 1,024 bytes), and a CRC (32 bits) are set as a frame structure, a CRC-32 is used as an error detection manner, and a selective repeat automatic repeat request (ARQ) is used as an ARQ manner, a network layer in which a mesh network is used as a topology and an ad hoc on-demand distance vector (AODV) is used as a routing protocol, and a transport layer in which a modified transmission control protocol (TCP) is used as a connection-oriented protocol and an additive increase/multiplicative decrease (AIMD) algorithm is used as a congestion control manner.

The power management unit 113-5 may manage and control power. The power management unit 113-5 may supply required power to each of the units constituting the UARF IC 113.

The UARF IC 113 may estimate a Doppler shift of an acoustic signal (reception signal) received from the outside and compensate the reception signal according to the estimated Doppler shift. A Doppler effect may be generated due to a change in the density of a medium due to external vibrations or temperature changes. The Doppler effect may generate a carrier wave frequency offset and thus degrade communication performance. Thus, in the present embodiment, the Doppler effect (Doppler shift) caused by external vibrations or the change in the density of the medium may be estimated, the reception signal may be compensated according to the estimated Doppler shift, and thus communication performance may be prevented from being degraded. The UARF IC 113 may estimate the Doppler shift using a maximum likelihood estimation technique.

The UARF IC 113 may estimate a Doppler frequency from the reception signal, a carrier wave frequency value, and a sampling rate. The UARF IC 113 may calculate the Doppler shift by performing fast Fourier transform (FFT) on the reception signal, generating a frequency axis corresponding to the fast Fourier transform using the sampling rate and a preset FFT size (e.g., 8192), calculating a size of each frequency component from the fast Fourier transform result, detecting the frequency component having the largest size, detecting a frequency value of the previously detected frequency component on the previously generated frequency axis, and calculating a difference between the detected frequency value and a carrier wave frequency value. The UARF IC 113 may estimate the Doppler shift by performing the fast Fourier transform on the reception signal to obtain the frequency component and finding a frequency at which the largest change in the carrier wave frequency is generated.

The UARF IC 113 may compensate the reception signal by generating a time vector corresponding to the reception signal from the number of samples of the reception signal and a preset sampling rate, calculating a Doppler compensation coefficient from the time vector and the Doppler shift, and multiplying the calculated Doppler compensation coefficient by the acoustic signal. The method of estimating and compensating for the Doppler shift may be represented by a Python code as illustrated in FIG. 3.

The UARF IC 113 may further include a least mean square (LMS)-based adaptive equalizer. The UARF IC 113 may correct distortion generated in the acoustic signal due to a change in characteristics of the silicone oil using the adaptive equalizer.

The UARF IC 113 may repeat a process of updating an equalizer coefficient by calculating a convolution between the reception signal and the equalizer coefficient to generate an equalized signal, calculating an error between the equalized signal and a training signal, multiplying the result of the calculated convolution between the calculated error and a reverse order of the reception signal by a preset learning rate, and adding the multiplied value to the equalizer coefficient. In this way, the UARF IC 113 may continuously update the equalizer coefficient and may generate an equalized signal (distortion-corrected acoustic signal) by calculating the convolution between the updated equalizer coefficient and the reception signal. The method of updating the equalizer coefficient may be represented by a Python code as illustrated in FIG. 4.

The UARF IC 113 may perform channel coding using a low density parity check (LDPC) code. The LDPC code has high error correction capabilities, has a structure capable of parallel processing, and thus is suitable for high-speed and high-reliability communication. In the present embodiment, the channel coding may be performed using the LDPC code, and thus an error bit occurring due to a multi-path and a fading effect may be effectively corrected.

The UARF IC 113 may encode data (input data) to be transmitted into an LDPC code. The UARF IC 113 may encode the input data by multiplying the input data by a generation matrix of a preset LDPC code. The UARF IC 113 may decode data (reception data) received from the outside. The UARF IC 113 may calculate a syndrome by multiplying the reception data by a transposed matrix of a preset parity check matrix and may determine whether the reception data is erroneous based on the calculated syndrome. When a value obtained by dividing the syndrome by 2 is 0, the UARF IC 113 may determine that there is no error in the reception data. The UARF IC 113 may repeatedly perform the process of calculating the syndrome and determining whether there is an error in the reception data a preset number of times and may finally determine that there is no error in the reception data when it is determined that there is no error in the reception data in all processes. The UARF IC 113 may estimate an actual value of the reception data from the syndrome using a belief propagation, a sum-product algorithm, and or like and correct the reception data to the estimated actual value. The method of encoding the input data and the method of decoding the reception data may be represented by a Python code as illustrated in FIG. 5.

In various embodiments, the UARF IC 113 may output an acoustic signal using an adaptive beamforming technology to reduce multi-path interference. In various embodiments, the UARF IC 113 may encrypt and decrypt the transmitted and received data through an AES-256 encryption algorithm. In various embodiments, the UARF IC 113 may perform mutual authentication using a challenge-response manner. In various embodiments, the UARF IC 113 may perform integrity verification on the transmitted and received data using a hash-based message authentication code (HMAC).

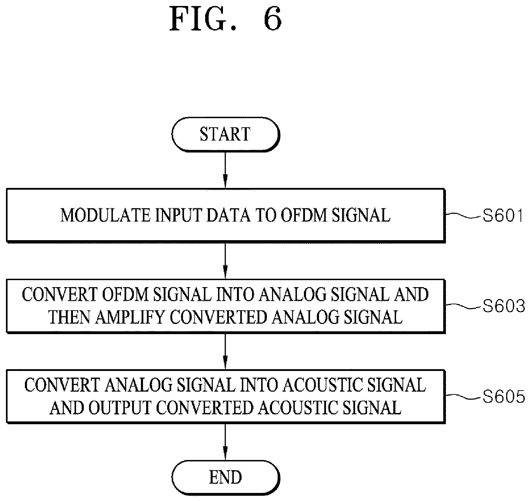

FIG. 6 is a first flowchart illustrating a method of operating a battery module according to embodiments of the present disclosure.

Hereinafter, a process in which the battery module 110 transmits data will be described with reference to FIG. 6 while focused on an operation of the UARF IC 113.

First, the digital signal processor 113-3 of the UARF IC 113 may modulate the data (input data) to be transmitted into an OFDM signal (S601). The UARF IC 113 may receive the input data from the slave BMS 112. Prior to operation S601, the UARF IC 113 may encode the input data using the LDPC code.

Next, the analog front end 113-2 of the UARF IC 113 may convert the OFDM signal output from the digital signal processor 113-3 into an analog signal and then amplify the converted analog signal (S603). Operation S603 may be performed by the digital-to-analog converter, the LNA, and the variable gain amplifier of the analog front end 113-2.

Next, the ultrasonic transducer array 113-1 of the UARF IC 113 may convert an analog signal output from the analog front end 113-2 into an acoustic signal and output the converted acoustic signal (S605).

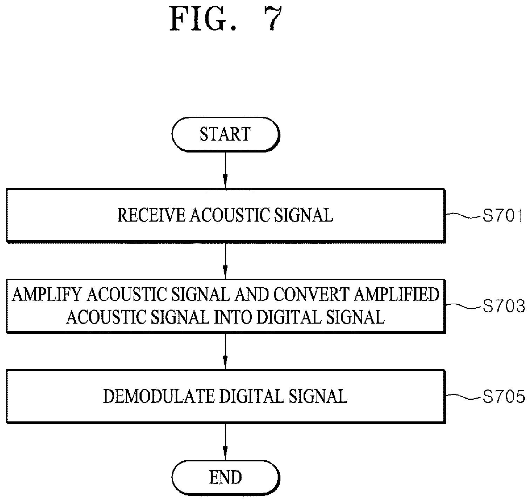

FIG. 7 is a second flowchart illustrating the method of operating the battery module according to embodiments of the present disclosure.

Hereinafter, a process in which the battery module 110 receives data will be described with reference to FIG. 7 while focused on an operation of the UARF IC 113.

First, the ultrasonic transducer array 113-1 of the UARF IC 113 may receive an acoustic signal transmitted through silicone oil (S701).

Next, the analog front end 113-2 of the UARF IC 113 may amplify the acoustic signal received through the ultrasonic transducer array 113-1 and then convert the amplified acoustic signal into a digital signal (S703). Operation S703 may be performed by the LNA and the analog-to-digital converter of the analog front end 113-2.

Prior to operation S703, the UARF IC 113 may restore the acoustic signal distorted due to a change in characteristics of the silicone oil using the LMS-based adaptive equalizer. Further, prior to operation S703, the UARF IC 113 may estimate the Doppler shift of the acoustic signal and compensate the acoustic signal according to the estimated Doppler shift.

Next, the digital signal processor 113-3 of the UARF IC 113 may demodulate the digital signal output from the analog front end 113-2 (S705). The digital signal demodulated by the digital signal processor 113-3 may be output to the slave BMS 112. After operation S705, the UARF IC 113 may decode the signal output from the digital signal processor 113-3.

In this way, according to the present disclosure, since a battery pack is filled with silicone oil, thermal management efficiency (cooling performance) of the battery pack can be improved, and spread of fire due to thermal runaway can be prevented.

Further, according to the present disclosure, since communication between battery modules or between the battery module and a master BMS is performed through acoustic communication using silicone oil as a medium, space efficiency of the battery pack can be improved, and a volume and a weight of the battery pack can be reduced.

Embodimentss described herein may be implemented, for example, as a method or process, a device, a software program, a data stream, or a signal. Although discussed in the context of a single type of implementation (for example, discussed only as a method), features discussed herein may also be implemented in other forms (for example, a device or a program). The device may be implemented by suitable hardware, software, firmware, and the like. The method may be implemented on a device, such as a processor that generally refers to a processing device including a computer, a microprocessor, an integrated circuit, a programmable logic device, etc. The processor includes a communication device such as a computer, a cell phone, a personal digital assistant (PDA), and other devices that facilitate communication of information between the device and end-users.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, herein.

Embodiments are set out in the following clauses:
1. A battery pack comprising:
   a housing;
   a plurality of battery modules or a cell stack provided inside the housing;
   a fluid with which an inside of the housing is filled; and
   a master battery management system (BMS) configured to manage the plurality of battery modules or the cell stack,
   wherein a battery module or the cell stack performs acoustic communication with another battery module, another cell stack, or the master BMS using the fluid as a medium.
2. The battery pack of clause 1, wherein the fluid is silicone oil.
3. The battery pack of clause 1 or clause 2, wherein the battery module or the cell stack includes:
   a plurality of battery cells;
   a slave BMS configured to manage the plurality of battery cells; and
   a communication module configured to support the acoustic communication.
4. The battery pack of clause 3, wherein the communication module is an underwater acoustic radio frequency integrated circuit (UARF IC).
5. The battery pack of clause 4, wherein the UARF IC includes:
   an ultrasonic transducer array;
   an analog front end; and
   a digital signal processor.
6. The battery pack of clause 5, wherein the analog front end includes:
   a low noise amplifier;
   a variable gain amplifier;
   an analog-to-digital converter; and
   a digital-to-analog converter.
7. The battery pack of clause 5 or clause 6, wherein the UARF IC modulates input data into an orthogonal frequency division multiplexing (OFDM) signal through the digital signal processor, converts the OFDM signal into an analog signal through the analog front end, amplifies the converted analog signal, converts the amplified analog signal into an acoustic signal through the ultrasonic transducer array, and then outputs the converted acoustic signal.
8. The battery pack of any of clauses 5 to 7, wherein the UARF IC receives an acoustic signal through the ultrasonic transducer array, amplifies the acoustic signal through the analog front end, converts the amplified acoustic signal into a digital signal, and demodulates the digital signal through the digital signal processor.
9. The battery pack of clause 8, wherein the UARF IC estimates a Doppler shift of the acoustic signal and compensates the acoustic signal according to the Doppler shift.
10. The battery pack of clause 8 or clause 9, wherein the UARF IC further includes a least mean square (LMS)-based adaptive equalizer, and
   wherein the UARF IC corrects distortion generated in the acoustic signal due to a change in a characteristic of the fluid using the adaptive equalizer.
11. The battery pack of any of clauses 4 to 10, wherein the UARF IC performs channel coding using a low density parity check (LDPC) code.
12. A battery module comprising:
   a plurality of battery cells;
   a battery management system (BMS) configured to manage the plurality of battery cells; and
   an underwater acoustic radio frequency integrated circuit (UARF IC) configured to transmit data transmitted from the BMS using a fluid as a medium or receive data transmitted using the fluid as a medium and to transmit the received data to the BMS.
13. The battery module of clause 12, wherein the fluid is silicone oil.
14. The battery module of clause 12 or clause 13, wherein the UARF IC includes:
   an ultrasonic transducer array;
   an analog front end; and
   a digital signal processor.
15. The battery module of clause 14, wherein the UARF IC modulates input data into an orthogonal frequency division multiplexing (OFDM) signal through the digital signal processor, converts the OFDM signal into an analog signal through the analog front end, amplifies the converted analog signal, converts the amplified analog signal into an acoustic signal through the ultrasonic transducer array, and then outputs the converted acoustic signal.
16. The battery module of clause 14 or clause 15, wherein the UARF IC receives an acoustic signal through the ultrasonic transducer array, amplifies the acoustic signal through the analog front end, converts the amplified acoustic signal into a digital signal, and demodulates the digital signal through the digital signal processor.
17. The battery module of clause 16, wherein the UARF IC estimates a Doppler shift of the acoustic signal and compensates the acoustic signal according to the Doppler shift.
18. The battery module of clause 16 or clause 17, further comprising a loot mean square (LMS)-based adaptive equalizer, and
   wherein the UARF IC corrects distortion generated in the acoustic signal due to a change in a characteristic of the fluid using the adaptive equalizer.
19. The battery module of any of clauses 12 to 18, wherein the UARF IC performs channel coding using a low density parity check (LDPC) code.
20. A method of operating a battery module, comprising:
   transmitting, by an underwater acoustic radio frequency integrated circuit (UARF IC), data transmitted from a battery management system (BMS) using a fluid as a medium; and
   receiving, by the UARF IC, the data transmitted using the fluid as a medium and transmitting the received data to the BMS.

## Claims

1. A battery pack comprising:
a housing;
a plurality of battery modules or a cell stack provided inside the housing;
a fluid with which an inside of the housing is filled; and
a master battery management system (BMS) configured to manage the plurality of battery modules or the cell stack,
wherein a battery module or the cell stack is configured to perform acoustic communication with another battery module, another cell stack, or the master BMS using the fluid as a medium.

2. The battery pack of claim 1, wherein the battery module or the cell stack includes:
a plurality of battery cells;
a slave BMS configured to manage the plurality of battery cells; and
a communication module configured to support the acoustic communication.

3. The battery pack of claim 2, wherein the communication module is an underwater acoustic radio frequency integrated circuit (UARF IC), and
wherein the UARF IC includes:
an ultrasonic transducer array;
an analog front end; and
a digital signal processor.

4. The battery pack of claim 3, wherein the analog front end includes:
a low noise amplifier;
a variable gain amplifier;
an analog-to-digital converter; and
a digital-to-analog converter.

5. The battery pack of claim 3 or claim 4, wherein the UARF IC is configured to :
modulate input data into an orthogonal frequency division multiplexing (OFDM) signal through the digital signal processor,
convert the OFDM signal into an analog signal through the analog front end,
amplify the converted analog signal,
convert the amplified analog signal into an acoustic signal through the ultrasonic transducer array, and
output the converted acoustic signal.

6. The battery pack of any of claims 3 to 5, wherein the UARF IC is configured to:
receive an acoustic signal through the ultrasonic transducer array,
amplify the acoustic signal through the analog front end,
convert the amplified acoustic signal into a digital signal, and
demodulate the digital signal through the digital signal processor.

7. The battery pack of claim 6, wherein the UARF IC is configured to estimate a Doppler shift of the acoustic signal and compensate the acoustic signal according to the Doppler shift.

8. The battery pack of claim 6 or claim 7, wherein the UARF IC further includes a least mean square (LMS)-based adaptive equalizer, and
wherein the UARF IC is configured to correct distortion generated in the acoustic signal due to a change in a characteristic of the fluid using the adaptive equalizer.

9. A battery module comprising:
a plurality of battery cells;
a battery management system (BMS) configured to manage the plurality of battery cells; and
an underwater acoustic radio frequency integrated circuit (UARF IC) configured to transmit data transmitted from the BMS using a fluid as a medium or receive data transmitted using the fluid as a medium and to transmit the received data to the BMS.

10. The battery module of claim 9, wherein the UARF IC includes:
an ultrasonic transducer array;
an analog front end; and
a digital signal processor.

11. The battery module of claim 10, wherein the UARF IC is configured to:
modulate input data into an orthogonal frequency division multiplexing (OFDM) signal through the digital signal processor,
convert the OFDM signal into an analog signal through the analog front end,
amplify the converted analog signal,
convert the amplified analog signal into an acoustic signal through the ultrasonic transducer array, and
output the converted acoustic signal.

12. The battery module of claim 10 or claim 11, wherein the UARF IC is configured to:
receive an acoustic signal through the ultrasonic transducer array,
amplify the acoustic signal through the analog front end,
convert the amplified acoustic signal into a digital signal, and
demodulate the digital signal through the digital signal processor.

13. The battery module of claim 12, further comprising a least mean square (LMS)-based adaptive equalizer, and
wherein the UARF IC is configured to correct distortion generated in the acoustic signal due to a change in a characteristic of the fluid using the adaptive equalizer.

14. The battery module of any of claims 9 to 13, wherein the UARF IC is configured to perform channel coding using a low density parity check (LDPC) code.

15. A method of operating a battery module, comprising:
transmitting, by an underwater acoustic radio frequency integrated circuit (UARF IC), data transmitted from a battery management system (BMS) using a fluid as a medium; and
receiving, by the UARF IC, the data transmitted using the fluid as a medium and transmitting the received data to the BMS.
